# EUROPÄISCHE PATENTSCHRIFT

(11) **EP 0 780 681 B1**
(45) Veröffentlichungstag und Bekanntmachung des Hinweises auf die Patenterteilung: **05.09.2007**
(21) Anmeldenummer: 96118910.7
(22) Anmeldetag: 26.11.1996
(51) Int. Cl.: G01N 21/37

(54) **Zweistrahl-Gasanalysator und Verfahren zu seiner Kalibrierung**
Two-beam gas analyzer and its calibration method
Analyseur de gaz à deux faisceaux et procédé pour son étalonnage

(30) Priorität: 20.12.1995 DE 19547787
(43) Veröffentlichungstag der Anmeldung: 25.06.1997
(73) Patentinhaber: SIEMENS AKTIENGESELLSCHAFT, 80333 München (DE)
(72) Erfinder: Aidam, Eckhard, 76751 Jockgrimm (DE); Weinel, Johann, 76149 Karlsruhe (DE)

(56) Entgegenhaltungen:
- DD-A- 234 493
- DE-A- 2 639 210
- DE-A- 3 932 838
- US-A- 3 937 962
- US-A- 4 010 368

## Beschreibung

Die Erfindung betrifft ein Verfahren zum Kalibrieren eines Zweistrahl-Gasanalysators nach dem Oberbegriff des Anspruchs 1 und des Anspruchs 2.

Die Erfindung betrifft ferner einen Zweistrahl-Gasanalysator entsprechend dem Oberbegriff von Anspruch 6.

So ist aus der EP 0 199 365 A3 ein Infrarot-Zweistrahl-Gasanalysator bekannt, bei dem die von einer Strahlungsquelle ausgehende Infrarot-Strahlung mittels eines Strahlenteilers mit nachgeordnetem Lichtzerhacker in einen pulsierenden Meßstrahl und einen pulsierenden Vergleichsstrahl aufgeteilt wird. Der Meßstrahl durchstrahlt eine mit Meßgas füllbare Meßküvette, wobei eine meßgasspezifische Intensitätsschwächung stattfindet, während der Vergleichsstrahl eine mit einem Vergleichsgas, vorzugsweise einem nichtabsorbierenden Inertgas, gefüllte Vergleichsküvette durchläuft. Jeder Küvette ist jeweils eine gasgefüllte Empfängerkammer nachgeordnet, in der die aus der jeweiligen Küvette austretende Strahlung durch Absorption Druckschwankungen erzeugt. Aufgrund der Vorabsorption durch das Meßgas in der Meßküvette sind die in den Empfängerkammern hervorgerufenen Druckschwankungen unterschiedlich. Die resultierende Druckdifferenz wird mittels eines in einer Verbindung zwischen beiden Empfängerkammern liegenden Druck- oder Strömungsdetektors erfaßt. Es ist allgemein bekannt, durch Wichtung des dabei erhaltenen Differenzsignals einen Meßwert zu erzeugen, wobei der Wichtungsfaktor dadurch ermittelt wird, daß die Meßküvette mit einem Kalibrier- oder Eichgas mit bekanntem Absorptionsverhalten gefüllt wird, und der Wichtungsfaktor so eingestellt wird, daß sich ein dem Eichwert des Kalibrier- oder Eichgases entsprechender Meßwert ergibt.

Schmutzeintrag durch das Meßgas in die Meßküvette, Veränderungen an der Strahlungsquelle oder andere Störeinflüsse machen ein regelmäßiges Nachkalibrieren des Zweistrahl-Gasanalysators erforderlich. Dies kann, wie oben beschrieben, jedesmal mit einem Kalibrier- oder Eichgas erfolgen, was jedoch, z. B. im Hinblick auf die dazu benötigten Gaseinrichtungen, aufwendig ist.

Es besteht die Möglichkeit, die Intensitätsschwächung durch das Kalibrier- oder Eichgas ersatzweise mittels einer veränderlichen Blende im Meßstrahlengang nachzubilden, jedoch bleiben dabei ungleichmäßige Verschmutzungen in der Meßküvette, die von der Blende abgedeckt werden, z. B. Verschmutzungen an der Wandung der Meßküvette, bei der Nachkalibrierung unberücksichtigt. Außerdem müßte die Genauigkeit der Blendeneinstellung im Größenbereich des Störanteils der Verschmutzung an der Gesamtintensität des Meßstrahls, erfahrungsgemäß also im Promillebereich liegen, was jedoch nur mit großem gerätetechnischen Aufwand zu realisieren ist.

Eine weitere Möglichkeit, beim Nachkalibrieren die Füllung der Meßküvette mit Kalibrier- oder Eichgas zu umgehen, besteht darin, anstelle der Meßküvette eine Kalibrier- oder Eichküvette mit darin fest eingeschlossenem Kalibrier- oder Eichgas in den Meßstrahlengang zu schieben. Der hierzu erforderliche konstruktive Aufwand für die spezielle Kalibrier- oder Eichküvette samt dem erforderlichen Verschiebe- oder Verschwenkmechanismus ist jedoch sehr hoch. Außerdem ist der Eingriff in den Meßstrahlengang als problematisch anzusehen, da bereits kleine Änderungen der Lage der Meßküvette bei ihrem Zurückschieben in den Meßstrahlengang als Störungen auf das Meßsystem wirken.

Aus der eingangs erwähnten DE 26 39 210 A1 ist es bekannt, Blenden an unterschiedlichen Stellen im Meß- und/oder Vergleichsstrahlengang eines Zweistrahl-Gasanalysators einzuschieben, um einen optischen Abgleich (Symmetrierung) bei der Nullpunkteinstellung zu ermöglichen.

Der Erfindung liegt die Aufgabe zugrunde, ein genaues und einfaches Nachkalibrieren eines Zweistrahl-Gasanalysators zu ermöglichen, ohne die Meßküvette mit einem Kalibrier- oder Eichgas füllen zu müssen.

Gemäß der Erfindung wird die Aufgabe bezüglich des im Oberbegriff des Anspruchs 1 bzw. Anspruch 2 angegebenen Verfahrens und bezüglich des im Oberbegriff des Anspruchs 6 angegebenen Zweistrahl-Gasanalysators durch die kennzeichnenden Merkmale des betreffenden Anspruchs gelöst.

Vorteilhafte Weiterbildungen des erfindungsgemäßen Verfahrens bzw. des erfindungsgemäßen Zweistrahl-Gasanalysators sind in den Unteransprüchen angegeben.

Zur weiteren Erläuterung der Erfindung und deren Vorteile wird im folgenden auf die Figuren der Zeichnung Bezug genommen; im einzelnen zeigen:
- Figur 1: ein Ausführungsbeispiel für den erfindungsgemäßen Zweistrahl-Gasanalysator und die
- Figuren 2 bis 9: schematische Darstellungen des Zweistrahl-Gasanalysators mit Zahlenbeispielen zur Erläuterung von Kalibrier- und Meßvorgängen.

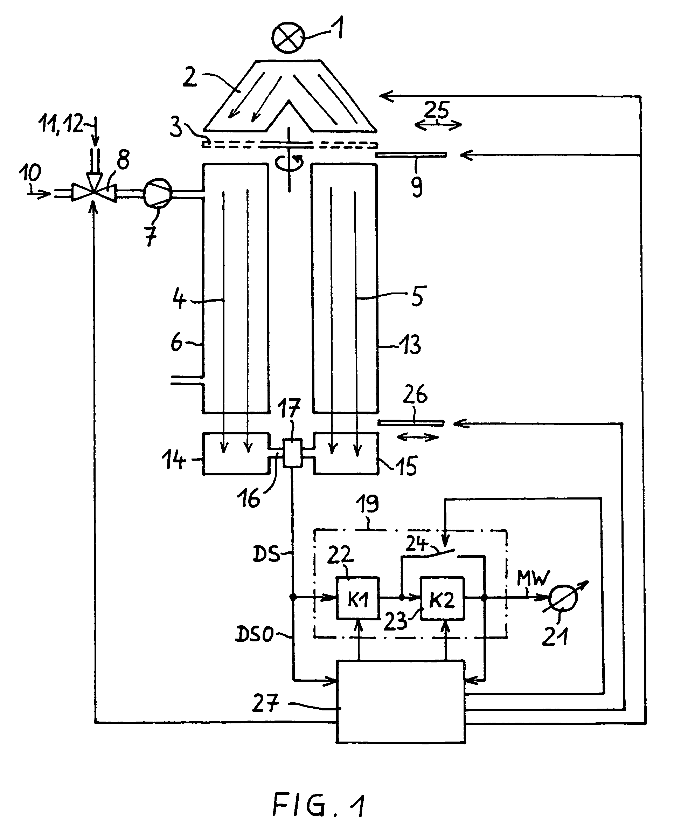

Figur 1 zeigt einen Zweistrahl-Gasanalysator mit einer Infrarot-Strahlungsquelle 1, deren Strahlung von einem Strahlenteiler 2 mit einem nachgeordneten Lichtzerhacker 3 in Form eines rotierenden Blendenrads in einen pulsierenden Meßstrahl 4 und einen pulsierenden Vergleichsstrahl 5 aufgeteilt wird. Im Verlauf des Meßstrahls 4 ist eine Meßküvette 6 angeordnet, die über eine Pumpe 7 und steuerbare Ventile 8 wahlweise mit einem zu analysierenden Meßgas 10 oder mit einem die Strahlung nichtabsorbierenden Inertgas 11 bzw. für die Eichung mit einem Kalibrier- oder Eichgas 12 füllbar ist. In der Meßküvette 6 findet je nach Art und Konzentration des darin enthaltenen Gases eine Vorabsorption des Meßstrahls 4 statt. Im Strahlengang des Vergleichsstrahls 5 liegt eine Vergleichsküvette 13, in der ein Vergleichsgas, z. B. ein Inertgas, fest eingeschlossen ist. Sowohl der Meßküvette 6 als auch der Vergleichsküvette 13 ist jeweils eine gasgefüllte Empfängerkammer 14 bzw. 15 zum Empfang der aus der jeweiligen Küvette 6 bzw. 13 austretenden Strahlung nachgeordnet. Die empfangene pulsierende Strahlung erzeugt durch Absorption Druckschwankungen in der jeweiligen Empfängerkammer 14 bzw. 15, wobei diese Druckschwankungen je nach Vorabsorption in der Meßküvette 6 unterschiedlich sein können. Beide Empfängerkammern 14 und 15 sind über eine Verbindungsleitung 16 miteinander verbunden, in der ein Druck- oder Strömungsdetektor 17 zur Detektion der Druckdifferenzen zwischen beiden Empfängerkammern 14 und 15 bzw. der dadurch hervorgerufenen Gasströmungen angeordnet ist. Das dabei erhaltene Differenzsignal DS wird in einer Signalverarbeitungseinrichtung 19 gewichtet, so daß sich an deren Ausgang ein Meßwert MW ergibt, der in einer Anzeige- oder Registriereinrichtung 21 zur Anzeige gebracht bzw. aufgezeichnet wird. Bei der betriebsmäßigen Analyse von Meßgas 10 erfolgt die Wichtung des Differenzsignals DS in einer hier als Verstärkerstufe dargestellten Einrichtung 22 mit einem zuvor in einem Kalibrier- oder Eichvorgang ermittelten Wichtungsfaktor K1. Eine im Signalweg liegende zweite Einrichtung 23, z. B. eine zweite Verstärkerstufe, mit einem signalwichtenden Zusatzfaktor K2 ist dabei mittels einer steuerbaren Schalteinrichtung 24 überbrückt.

Zur Kalibrierung des Zweistrahl-Gasanalysators läßt sich, wie dies durch einen Doppelpfeil 25 angedeutet ist, durch mechanische Verstellung der Strahlungsquelle 1 oder des Strahlenteilers 2 oder durch Einschieben eines Elements 9 zur Strahlenbegrenzung in den Vergleichsstrahlengang 5 die Balance der Strahlungseinleitung in die Meßküvette 6 und die Vergleichsküvette 13 justieren. Ferner läßt sich der Vergleichsstrahl 5 durch eine steuerbare Blende 26 unterbrechen, wobei die Blende 26 im Unterschied zur Darstellung in Figur 1 auch zwischen dem Strahlenteiler 2 und der Vergleichsküvette 13 angeordnet sein kann. Die entsprechende Steuerung für die Verstellung der Blende 26 und der Strahlungseinkopplung in die Meßküvette 6 und die Vergleichsküvette 13 erfolgt durch eine Steuereinrichtung 27, die auch die Steuerung der Ventile 8 sowie der Schalteinrichtung 24 und die Einstellung des Wichtungsfaktors K1 und des Zusatzfaktors K2 durchführt.

Zur erstmaligen Kalibrierung oder Eichung des Zweistrahl-Gasanalysators, also zur Bestimmung des Wichtungsfaktors K1, wird die Meßküvette 6 mit einem Kalibrier- oder Eichgas beströmt, dessen Eichwert, d. h. der korrekt anzuzeigende Meßwert MW, bekannt ist. Bei überbrückter Verstärkerstufe 23, also geschlossenem Schalter 24, wird der Wichtungsfaktor K1 von der Steuerung 27 so eingestellt, daß der Meßwert MW dem vorgegebenen Eichwert entspricht.

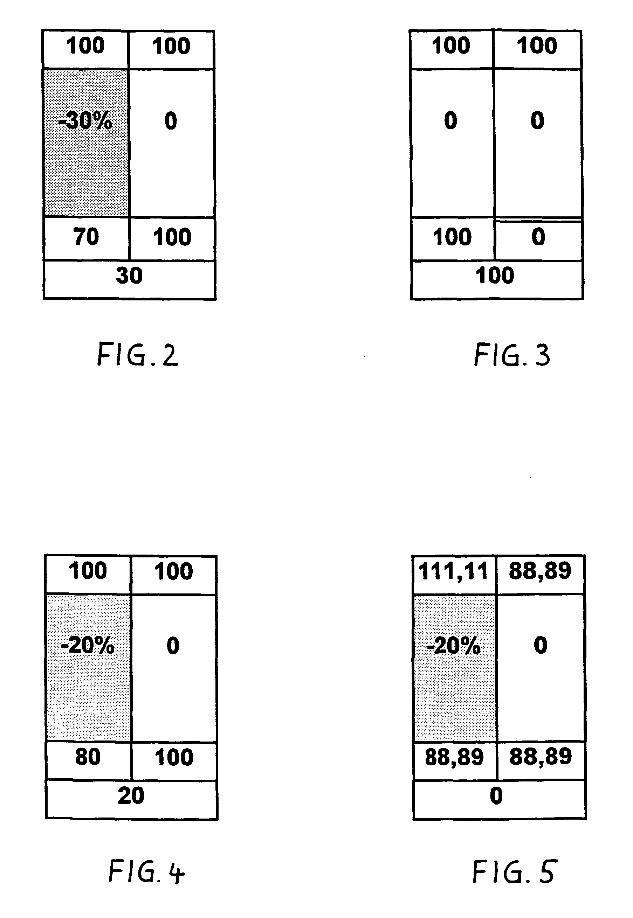

In Figur 2 ist dieser Eichvorgang schematisch anhand eines einfachen Zahlenbeispiels verdeutlicht, bei dem durch die Anordnung von Strahlungsquelle 1 und Strahlenteiler 2 sowohl in die Meßküvette 6 als auch die Vergleichsküvette 13 jeweils eine Strahlung mit dem Intensitätswert 100 eingeleitet wird. Die bekannte Intensitätsschwächung durch das Kalibrier- oder Eichgas in der Meßküvette 6 beträgt 30 %, während das Inertgas in der Vergleichsküvette 13 keine Intensitätsschwächung hervorruft. Die in den beiden Empfängerkammern 14 und 15 empfangenen Intensitätswerte betragen somit 70 bzw. 100, woraus sich für das Differenzsignal DS der Wert 30 ergibt. Dieser entspricht dem Eichwert des Kalibrier- bzw. Eichgases, so daß der Wichtungsfaktor mit K1 = 1 eingestellt wird.

Für spätere Nachkalibrierungen, die ohne Kalibrier- oder Eichgas erfolgen sollen, wird nach der erstmaligen Kalibrierung oder Eichung die Meßküvette 6 mit einem Inertgas gefüllt und der Strahlengang des Vergleichsstrahls 5 zur Empfängerkammer 15 mittels der Blende 26 völlig unterbrochen. Bei geöffnetem Schalter 24 wird jetzt der Zusatzfaktor K2 so eingestellt, daß der Meßwert MW wieder dem Eichwert entspricht.

Wie Figur 3, ausgehend von dem Zahlenbeispiel nach Figur 2, zeigt, wird dabei in der Empfängerkammer 14 der Intensitätswert 100 und in der Empfängerkammer 15 aufgrund des unterbrochenen Vergleichsstrahls der Intensitätswert 0 empfangen, so daß sich für das Differenzsignal DS der Wert 100 ergibt. Dieser soll gewichtet mit dem Wichtungsfaktor K1 = 1 und dem zu ermittelnden Zusatzfaktor K2 den Eichwert 30 ergeben, so daß sich mit 100 · K1 · K2 = 100 · K2 = 30 der Zusatzfaktor K2 = 0,3 ergibt.

Betriebsmäßige Analysen von Meßgas erfolgen anschließend bei überbrückter Verstärkerstufe 23 und aus dem Vergleichsstrahlengang 5 herausgeschobener Blende 26, wobei das erhaltene Differenzsignal DS zur Erzeugung des Meßwertes MW mit dem Wichtungsfaktor K1 gewichtet wird.

Aufgrund von Verschmutzungen in der Meßküvette 6, Veränderungen an der Strahlungsquelle 1 oder sonstigen Störeinflüssen ist eine regelmäßige Nachkalibrierung des Zweistrahl-Gasanalysators erforderlich. Dies erfolgt in der Weise, daß die Meßküvette 6 mit Inertgas 11 gefüllt wird. Obwohl das Inertgas 11 die Strahlungsintensität nicht beeinflußt, wird die Strahlungsintensität in der Meßküvette 6 durch die vorhandenen Störeinflüsse verringert, so daß sich ein durch die Störeinflüsse hervorgerufenes Differenzsignal DS ≠ 0 ergibt. Diese Nullpunktabweichung wird zunächst durch eine automatische Verstellung der Strahlungsquelle 1 oder des Strahlenteilers 2 oder durch Verstellen des Elements 9 zur Strahlenbegrenzung kompensiert.

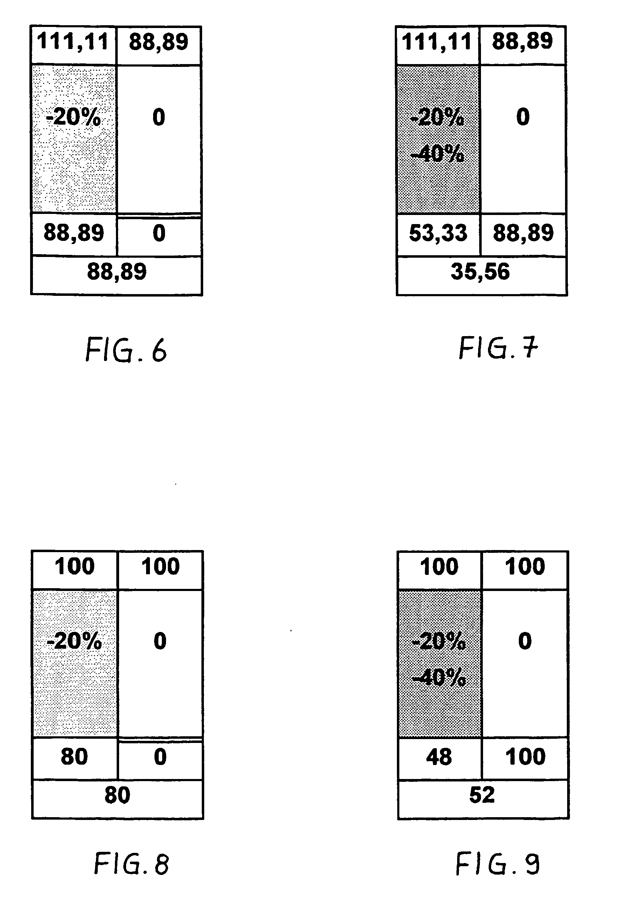

Figur 4 zeigt, daß sich, ausgehend von den Zahlenbeispielen in Figur 2 und 3, bei einer störungsbedingten Intensitätsminderung von 20 % in der mit Inertgas gefüllten Meßküvette 6 ein Differenzsignal DS mit dem Wert 20 ergibt. Diese Nullpunktabweichung wird entsprechend Figur 5 durch Veränderung der in die Meßküvette 6 und die Vergleichsküvette 13 eingeleiteten Strahlungsintensität auf 111,11 bzw. 88,89 kompensiert.

In einem zweiten Schritt wird der Vergleichsstrahlengang 5 mit der Blende 26 unterbrochen und bei gleichzeitig geöffnetem Schalter 24 der Wichtungsfaktor K1 derart korrigiert, daß der Meßwert MW wieder dem Eichwert entspricht.

Wie Figur 6 zeigt, ergibt sich bei unterbrochenem Vergleichsstrahl 5 für das Differenzsignal DS der Wert 88,89. Dieser soll gewichtet mit dem zu korrigierenden Wichtungsfaktor K1 und dem Zusatzfaktor K2 = 0,3 den Meßwert MW = 30 ergeben, so daß sich mit 88, 89 · K1 . K2 = 88, 89 · K1 · 0,3 = 30 der neue Wichtungsfaktor K1 = 1,125 ergibt.

Im Anschluß an die soeben beschriebene Nachkalibrierung des Zweistrahl-Gasanalysators erfolgen betriebsmäßige Analysen von Meßgas 10 bei überbrückter Verstärkerstufe 23 und aus dem Vergleichsstrahlengang 5 entfernter Blende 26, wobei das erhaltene Differenzsignal DS zur Erzeugung des Meßwertes MW mit dem korrigierten Wichtungsfaktor K1 gewichtet wird.

Figur 7 zeigt dies am Beispiel eines Meßgases, das in der Meßküvette 6 eine Intensitätsminderung des Meßstrahls 4 um 40 % bewirkt. Aufgrund der zusätzlichen störungsbedingten Intensitätsminderung um 20 % wird in der Empfängerkammer 14 der Intensitätswert 53,33 empfangen. Der in die Empfängerkammer 15 eintretende Vergleichsstrahl 5 weist den Intensitätswert 88,89 auf, so daß sich das Differenzsignal DS = 35,56 ergibt. Aus diesem Differenzsignal DS wird durch Wichtung mit dem korrigierten Wichtungsfaktor K1 = 1,125 der für das zu analysierende Meßgas korrekte Meßwert MW = 40 erzeugt.

Bei dem bisher beschriebenen Ausführungsbeispiel der Erfindung erfolgte im Rahmen der Nachkalibrierung die Kompensation von störungsbedingten Nullpunktabweichungen durch Nachjustieren der Strahlungsquelle 1 oder des Strahlenteilers 2 oder mittels des Elements 9. Im folgenden wird ein alternativer Nullpunktabgleich erläutert, der ausschließlich im Rahmen der Signalverarbeitung des Differenzsignals DS erfolgt, so daß sich in vorteilhafter Weise die mechanische Verstellung von Elementen des Zweistrahl-Gasanalysators erübrigt.

Ausgehend von dem Beispiel nach Figur 4, bei dem sich aufgrund einer störungsbedingten Intensitätsminderung von 20 % in der mit Inertgas gefüllten Meßküvette 6 das Differenzsignal DS = 20 ergibt, wird diese Nullpunktabweichung bei der Nachkalibrierung des Zweistrahl-Gasanalysators als Offsetwert DS0 (Figur 1) in der Steuereinrichtung 27 gespeichert. Zur Ermittlung des korrigierten Wichtungsfaktors K1 wird entsprechend Figur 8 der Vergleichsstrahl 5 unterbrochen, so daß sich das Differenzsignal DS = 80 ergibt. Dieses soll nun gewichtet mit dem zu korrigierenden Wichtungsfaktor K1 und dem Zusatzfaktor K2 = 0,3 den Meßwert MW = 30 ergeben, so daß sich mit 80 · K1 K2 = 80 · K1 · 0,3 = 30 der neue Wichtungsfaktor K1 = 1,25 ergibt.

Im Anschluß an die Nachkalibrierung des Zweistrahl-Gasanalysators erfolgen betriebsmäßige Analysen von Meßgas 10 wiederum bei überbrückter Verstärkerstufe 23 und aus dem Vergleichsstrahlengang 5 entfernter Blende 26, wobei das so erhaltene Differenzsignal DS mit dem in der Steuereinrichtung 27 abgespeicherten Offsetwert DS0 korrigiert und anschließend zur Erzeugung des Meßwertes MW mit dem korrigierten Wichtungsfaktor K1 gewichtet wird.

Figur 9 zeigt dies am Beispiel eines Meßgases, das in der Meßküvette 6 eine Intensitätsminderung des Meßstrahls 4 um 40 % bewirkt. Aufgrund der zusätzlichen störungsbedingten Intensitätsminderung von 20 % wird in der Empfängerkammer 14 der Intensitätswert 48 empfangen. Der ungeschwächt in die Empfängerkammer 15 eintretende Vergleichsstrahl 5 weist den Intensitätswert 100 auf, so daß sich das Differenzsignal DS = 52 ergibt. Dieses Differenzsignal DS wird mit dem Offsetwert DS0 = 20 korrigiert und anschließend mit dem korrigierten Wichtungsfaktor K1 = 1,25 gewichtet, so daß sich für das zu analysierende Meßgas der korrekte Meßwert MW = (DS - DS0) · K1 = (52 - 20) · 1,25 = 40 ergibt.

Die in Figur 1 dargestellten Schaltungsblöcke 21 ... 24 und 27 sind in erster Linie als Funktionsblöcke zu verstehen, deren Funktionen sowohl durch eine Hardwareschaltung als auch durch Programmablauf in einer Recheneinrichtung realisiert werden können. Die mit dem Doppelpfeil 25 angedeutete Verstellung der Strahlungsquelle 1, des Strahlenteilers 2 oder des Elements 9 beinhaltet darüber hinaus alle weiteren möglichen Maßnahmen, die zu einer Verstellung der Strahlungsaufteilung auf die Meßküvette 6 und die Vergleichsküvette 13 beitragen können. Das Differenzsignal DS beschreibt allgemein den Unterschied zwischen der aus der Meßküvette 6 austretenden Strahlung und der aus der Vergleichsküvette 13 austretenden Strahlung und kann auch anders als mit dem gezeigten Druck- oder Strömungsdetektor 17, beispielsweise mit strahlungssensitiven Halbleiterdetektoren, erzeugt werden.

## Patentansprüche

1. Verfahren zum Kalibrieren eines Zweistrahl-Gasanalysators
- mit einer mit einem Meßgas (10) füllbaren und von einem Meßstrahl (4) durchstrahlten Meßküvette (6),
- mit einer mit einem Vergleichsgas gefüllten und von einem Vergleichsstrahl (5) durchstrahlten Vergleichsküvette (13),
- mit einer der Meßküvette (6) und der Vergleichsküvette (13) nachgeordneten Detektoranordnung (14 ... 17), die ein Differenzsignal (DS) der aus beiden Küvetten (6, 13) jeweils austretenden Strahlen (4, 5) erzeugt, und
- mit einer Signalverarbeitungseinrichtung (19), die durch Wichtung des Differenzsignals (DS) mit einem Wichtungsfaktor (K1) einen der Meßgaskonzentration entsprechenden Meßwert (MW) erzeugt, wobei der Wichtungsfaktor (K1) bei Füllung der Meßküvette (6) mit einem Kalibrier- oder Eichgas (12) derart eingestellt wird, daß der Meßwert (MW) einem dem Kalibrier- oder Eichgas (12) zugehörigen Eichwert entspricht,
**dadurch gekennzeichnet,**
- **daß** bei ungefüllter oder mit einem Inertgas (11) gefüllter Meßküvette (6) und unterbrochenem Vergleichsstrahl (5) ein Zusatzfaktor (K2) in der Weise bestimmt wird, daß das Differenzsignal (DS) bei Wichtung mit dem Wichtungsfaktor (K1) und dem Zusatzfaktor (K2) dem Eichwert entspricht,
- **daß** bei späteren Kalibriervorgängen bei ungefüllter oder mit Inertgas (11) gefüllter Meßküvette (6) eine Nullpunktabweichung des Differenzsignals (DS) ermittelt und bei zusätzlich unterbrochenem Vergleichsstrahl (5) der Wichtungsfaktor (K1) in der Weise korrigiert wird, daß das Differenzsignal (DS) bei Wichtung mit dem korrigierten Wichtungsfaktor (K1) und dem Zusatzfaktor (K2) dem Eichwert entspricht,
- **daß** die ermittelte Nullpunktabweichung als Offset-Wert (DS0) abgespeichert wird und
- **daß** bei der Analyse von Meßgas das dabei erhaltene Differenzsignal (DS) mit dem abgespeicherten Offset-Wert (DS0) korrigiert und anschließend zur Erzeugung des Meßwertes (MW) mit dem korrigierten Wichtungsfaktor (K1) gewichtet wird.

2. Verfahren zum Kalibrieren eines Zweistrahl-Gasanalysators
- mit einer mit einem Meßgas (10) füllbaren und von einem Meßstrahl (4) durchstrahlten Meßküvette (6),
- mit einer mit einem Vergleichsgas gefüllten und von einem Vergleichsstrahl (5) durchstrahlten Vergleichsküvette (13),
- mit einer der Meßküvette (6) und der Vergleichsküvette (13) nachgeordneten Detektoranordnung (14 ... 17), die ein Differenzsignal (DS) der aus beiden Küvetten (6, 13) jeweils austretenden Strahlen (4, 5) erzeugt, und
- mit einer Signalverarbeitungseinrichtung (19), die durch Wichtung des Differenzsignals (DS) mit einem Wichtungsfaktor (K1) einen der Meßgaskonzentration entsprechenden Meßwert (MW) erzeugt, wobei der Wichtungsfaktor (K1) bei Füllung der Meßküvette (6) mit einem Kalibrier- oder Eichgas (12) derart eingestellt wird, daß der Meßwert (MW) einem dem Kalibrier- oder Eichgas (12) zugehörigen Eichwert entspricht,
**dadurch gekennzeichnet,**
- **daß** bei ungefüllter oder mit einem Inertgas (11) gefüllter Meßküvette (6) und unterbrochenem Vergleichsstrahl (5) ein Zusatzfaktor (K2) in der Weise bestimmt wird, daß das Differenzsignal (DS) bei Wichtung mit dem Wichtungsfaktor (K1) und dem Zusatzfaktor (K2) dem Eichwert entspricht,
- **daß** bei späteren Kalibriervorgängen bei ungefüllter oder mit Inertgas (11) gefüllter Meßküvette (6) eine Nullpunktabweichung des Differenzsignals (DS) ermittelt und durch Veränderung der Durchstrahlung der Meßküvette (6) und Vergleichsküvette (13) kompensiert wird und
- **daß** bei zusätzlich unterbrochenem Vergleichsstrahl (5) der Wichtungsfaktor (K1) in der Weise korrigiert wird, daß das Differenzsignal (DS) bei Wichtung mit dem korrigierten Wichtungsfaktor (K1) und dem Zusatzfaktor (K2) dem Eichwert entspricht.

3. Verfahren nach Anspruch 2, **dadurch gekennzeichnet,**
- **daß** zur Veränderung der Durchstrahlung der Meßküvette (6) und der Vergleichsküvette (13) ein Element (9) zur Strahlenbegrenzung in den Vergleichsstrahlengang (5) eingeschoben wird.

4. Verfahren nach einem der vorangehenden Ansprüche, **dadurch gekennzeichnet,**
- **daß** die Unterbrechung des Vergleichsstrahls (5) durch eine steuerbare Blende (26) erfolgt.

5. Verfahren nach einem der vorangehenden Ansprüche, **dadurch gekennzeichnet,**
- **daß** die Wichtung des Differenzsignals (DS) mit dem Wichtungsfaktor (K1) und dem Zusatzfaktor (K2) in zwei hintereinandergeschalteten Verstärkerstufen (22, 23) mit jeweils einstellbarer Verstärkung erfolgt, wobei die Verstärkerstufe (23) zur Realisierung der Wichtung mit dem Zusatzfaktor (K2) bei der Analyse von Meßgas (10) überbrückbar ist.

6. Zweistrahl-Gasanalysator
- mit einer mit einem Meßgas (10) füllbaren und von einem Meßstrahl (4) durchstrahlten Meßküvette (6),
- mit einer mit einem Vergleichsgas gefüllten und von einem Vergleichsstrahl (5) durchstrahlten Vergleichskammer (13),
- mit einer der Meßküvette (6) und der Vergleichsküvette (13) nachgeordneten Detektoranordnung (14...17), die ein Differenzsignal (DS) der aus beiden Küvetten (6, 13) austretenden Strahlen (4, 5) erzeugt, und
- mit einer Signalverarbeitungseinrichtung (19), die durch Wichtung des Differenzsignals (DS) mit einem einstellbaren Wichtungfaktor (K1) einen der Meßgaskonzentration entsprechenden Meßwert (MW) erzeugt,
**gekennzeichnet durch**
- eine zur Unterbrechung des Vergleichsstrahls (5) in diesen einbringbare Blende (26) und
- zwei hintereinandergeschaltete Verstärkerstufen (22, 23) zur Wichtung des Differenzsignals (DS) mit dem Wichtungsfaktor (K1) und einem einstellbaren Zusatzfaktor (K2), wobei die Verstärkerstufe (23) zur Realisierung der Wichtung mit dem Zusatzfaktor (K2) mittels einer steuerbaren Schalteinrichtung (24) überbrückbar ist.

## Claims

1. Method for calibrating a two-beam gas analyzer
- having a measuring cuvette (6) which can be filled with a measurement gas (10) and through which a measuring beam (4) is shone,
- having a reference cuvette (13) which is filled with a reference gas and through which a reference beam (5) is shone,
- having a detector arrangement (14 ... 17) arranged after the measuring cuvette (6) and the reference cuvette (13), which generates a difference signal (DS) of the beams (4, 5) respectively emerging from the two cuvettes (6, 13), and
- having a signal processing device (19) which generates a measurement value (MW) corresponding to the measurement gas concentration by weighting the difference signal (DS) with a weighting factor (K1), the weighting factor (K1) being adjusted when filling the measuring cuvette (6) with a calibration or standard gas (12) so that the measurement value (MW) corresponds to a standard value associated with the calibration or standard gas (12),
**characterized**
- **in that** with the measuring cuvette (6) unfilled or filled with an inert gas (11) and the reference beam (5) interrupted, an additional factor (K2) is determined so that the difference signal (DS) when weighted with the weighting factor (K1) and the additional factor (K2) corresponds to the standard value,
- **in that** during subsequent calibration processes with the measuring cuvette (6) unfilled or filled with an inert gas (11), a zero point error of the difference signal (DS) is determined and, with the reference beam (5) additionally interrupted, the weighting factor (K1) is corrected so that the difference signal (DS) when weighted with the corrected weighting factor (K1) and the additional factor (K2) corresponds to the calibration value,
- **in that** the zero point error determined is stored as an offset value (DS0),
- **in that** during the analysis of measurement gas, the difference signal (DS) thereby obtained is corrected with the stored offset value (DS0) and subsequently weighted with the corrected weighting factor (K1) in order to generate the measurement value (MW).

2. Method for calibrating a two-beam gas analyzer
- having a measuring cuvette (6) which can be filled with a measurement gas (10) and through which a measuring beam (4) is shone,
- having a reference cuvette (13) which is filled with a reference gas and through which a reference beam (5) is shone,
- having a detector arrangement (14 ... 17) arranged after the measuring cuvette (6) and the reference cuvette (13), which generates a difference signal (DS) of the beams (4, 5) respectively emerging from the two cuvettes (6, 13), and
- having a signal processing device (19) which generates a measurement value (MW) corresponding to the measurement gas concentration by weighting the difference signal (DS) with a weighting factor (K1), the weighting factor (K1) being adjusted when filling the measuring cuvette (6) with a calibration or standard gas (12) so that the measurement value (MW) corresponds to a standard value associated with the calibration or standard gas (12),
**characterized**
- **in that** with the measuring cuvette (6) unfilled or filled with an inert gas (11) and the reference beam (5) interrupted, an additional factor (K2) is determined so that the difference signal (DS) when weighted with the weighting factor (K1) and the additional factor (K2) corresponds to the standard value,
- **in that** during subsequent calibration processes with the measuring cuvette (6) unfilled or filled with an inert gas (11), a zero point error of the difference signal (DS) is determined and compensated for by modifying the illumination through the measuring cuvette (6) and the reference cuvette (13), and
- **in that** with the reference beam (5) additionally interrupted, the weighting factor (K1) is corrected so that the difference signal (DS) when weighted with the corrected weighting factor (K1) and the additional factor (K2) corresponds to the standard value.

3. Method according to Claim 2, **characterized in that**,
- an element (9) for beam limitation is inserted into the reference beam path (5) in order to modify the illumination through the measuring cuvette (6) and the reference cuvette (13).

4. Method according to one of the preceding claims, **characterized in that**
- the reference beam (5) is interrupted by a controllable shutter (26).

5. Method according to one of the preceding claims, **characterized in that**
- the weighting of the difference signal (DS) with the weighting factor (K1) and the additional factor (K2) takes place in two serially connected amplifier stages (22, 23) with a respectively adjustable gain, the amplifier stage (23) for carrying out the weighting with the additional factor (K2) being bypassable during the analysis of measurement gas (10).

6. Two-beam gas analyzer
- having a measuring cuvette (6) which can be filled with a measurement gas (10) and through which a measuring beam (4) is shone,
- having a reference cuvette (13) which is filled with a reference gas and through which a reference beam (5) is shone,
- having a detector arrangement (14 ... 17) arranged after the measuring cuvette (6) and the reference cuvette (13), which generates a difference signal (DS) of the beams (4, 5) respectively emerging from the two cuvettes (6, 13), and
- having a signal processing device (19) which generates a measurement value (MW) corresponding to the measurement gas concentration by weighting the difference signal (DS) with a weighting factor (K1),
**characterized by**
- a shutter (26) which can be introduced into the reference beam (5) in order to interrupt it, and
- two serially connected amplifier stages (22, 23) for weighting the difference signal (DS) with the weighting factor (K1) and an adjustable additional factor (K2), the amplifier stage (23) for carrying out the weighting with the additional factor (K2) being bypassable by means of a controllable switching device (24).

## Revendications

1. Procédé pour étalonner un analyseur de gaz à deux faisceaux,
- comportant une cuvette (6) de mesure pouvant être emplie d'un gaz (10) de mesure et traversée par un rayonnement (4) de mesure,
- comportant une cuvette (13) de comparaison emplie d'un gaz de comparaison et traversée par un rayonnement (5) de comparaison,
- comportant un dispositif (14...17) formant détecteur monté en aval de la cuvette (6) de mesure et de la cuvette (13) de comparaison et qui produit un signal (DS) de différence à partir des rayonnements (4,5) sortant des deux cuvettes (6,13), et
- comportant un dispositif (19) de traitement de signal, qui par pondération du signal (DS) de différence par un facteur (K1) de pondération produit une valeur (MW) de mesure correspondant à la concentration en le gaz de mesure, le facteur (K1) de pondération, lors du remplissage de la cuvette (6) de mesure par un gaz (12) d'étalonnage ou de calibrage, étant réglé de telle sorte que la valeur (MW) de mesure correspond à une valeur d'étalonnage associée au gaz (12) d'étalonnage ou de calibrage,
**caractérisé en ce que**,
- pour une cuvette (6) de mesure qui n'est pas emplie ou qui est emplie d'un gaz (11) inerte et par un rayonnement (5) de comparaison interrompu, il est déterminé un facteur (K2) supplémentaire de telle manière que le signal (DS) de différence, par pondération avec le facteur (K1) de pondération et le facteur (K2) supplémentaire, corresponde à la valeur de calibrage,
- **en ce que** par des opérations d'étalonnage ultérieures avec une cuvette (6) de mesure qui n'est pas emplie ou qui est emplie d'un gaz (11) inerte, il est déterminé un écart de point nul du signal (DS) de différence et par une interruption supplémentaire du rayonnement (5) de comparaison, le facteur (K1) de pondération est corrigé de telle manière que le signal (DS) de différence, par pondération avec le facteur (K1) de pondération corrigé et le facteur (K2) supplémentaire, corresponde à la valeur de calibrage,
- **en ce que** l'écart de point nul déterminé est mémorisé en tant que valeur (DS0) de Offset ou décalage, et
- **en ce que** par l'analyse du gaz de mesure, le signal (DS) de différence ainsi obtenu est corrigé par la valeur (DS0) de Offset mémorisé et, ensuite, pour produire la valeur (MW) de mesure, est pondéré par le facteur (K1) de pondération corrigé.

2. Procédé pour étalonner un analyseur de gaz à deux faisceaux,
- comportant une cuvette (6) de mesure qui peut être emplie d'un gaz (10) de mesure et être traversée par un rayonnement (4) de mesure,
- comportant une cuvette (13) de comparaison qui peut être emplie d'un gaz de comparaison et qui peut être traversée par un rayonnement (5) de comparaison,
- comportant un dispositif (14...17) de détection monté en aval de la cuvette (6) de mesure et de la cuvette (13) de comparaison, qui produit un signal (DS) de différence à partir des rayons (4,5) sortant des deux cuvettes (6,13), et
- comportant un dispositif (19) de traitement de signal, qui, par pondération, du signal (DS) de différence avec un facteur (K1) de pondération, produit une valeur (MW) correspondant à la concentration en le gaz de mesure, le facteur (K1) de pondération étant réglé lors du remplissage de la cuvette (6) de mesure avec un gaz (12) de calibrage ou d'étalonnage de sorte que la valeur (MW) de mesure corresponde à une valeur de calibrage associée au gaz (12) d'étalonnage ou de calibrage,
**caractérisé en ce que**,
- avec une cuvette (6) de mesure qui n'est pas emplie ou qui est emplie d'un gaz (11) inerte et une interruption du rayonnement (5) de comparaison, il est déterminé un facteur (K2) supplémentaire de telle manière que le signal (DS) de différence, par pondération avec le facteur (K1) de pondération et le facteur (K2) supplémentaire, corresponde à la valeur de calibrage,
- **en ce que** par des opérations d'étalonnage ultérieures avec une cuvette (6) de mesure qui n'est pas emplie ou qui est emplie d'un gaz (11) inerte, il est déterminé un écart de point nul du signal (DS) de différence et par modification du courant traversant la cuvette (6) de mesure et la cuvette (13) de comparaison, cet écart de point nul est compensé, et
- par une interruption supplémentaire du rayonnement (5) de comparaison, le facteur (K1) de pondération est corrigé de telle manière que le signal (DS) de différence, par pondération avec le facteur (K1) de pondération corrigé et le facteur (K2) supplémentaire, corresponde à la valeur de calibrage.

3. Procédé suivant la revendication 2, **caractérisé en ce que**
- pour modifier le rayonnement traversant la cuvette (6) de mesure et la cuvette (13) de comparaison, il est inséré un élément (9) pour délimiter le rayonnement dans le trajet (5) du rayonnement de comparaison.

4. Procédé suivant l'une des revendications précédentes, **caractérisé en ce que** l'interruption du rayonnement (5) de comparaison s'effectue par un diaphragme que l'on peut commander.

5. Procédé suivant l'une des revendications précédentes, **caractérisé en ce que**
- la pondération du signal (DS) de différence par le facteur (K1) de pondération et le facteur (K2) supplémentaire s'effectue dans deux étages (22, 23) d'amplification montés l'un derrière l'autre et comportant chacun une amplification pouvant être réglée, l'étage (23) d'amplification pour effectuer la pondération avec le facteur (K2) supplémentaire lors de l'analyse du gaz (10) de mesure pouvant être shuntée.

6. Analyseur de gaz à deux faisceaux,
- comportant une cuvette (6) de mesure pouvant être emplie d'un gaz (10) et traversée par un rayonnement (4) de mesure,
- comportant une chambre (13) de comparaison pouvant être emplie d'un gaz de comparaison et traversée par un rayonnement (5) de comparaison,
- comportant un dispositif (14...17) de détection montée en aval de la cuvette (6) de mesure et de la cuvette (13) de comparaison, qui produit un signal (DS) de différence à partir des rayonnements (4,5) sortant des deux cuvettes (6, 13), et
- comportant un dispositif (19) de traitement de signal, qui par pondération du signal (DS) de différence avec un facteur (K1) de pondération pouvant être réglé, produit une valeur (MW) de mesure correspondant à la concentration en le gaz de mesure,
**caractérisé par**
- un diaphragme (26) qui peut être introduit dans le rayonnement (5) de comparaison pour interrompre celui-ci, et
- deux étages (22, 23) amplificateur montés l'un après l'autre pour pondérer le signal (DS) de différence avec le facteur (K1) de pondération et un facteur (K2) supplémentaire pouvant être réglé, l'étage (23) d'amplification pour effectuer la pondération avec le facteur (K2) supplémentaire pouvant être shunté au moyen d'un dispositif (24) de commutation pouvant être commandé.
